## Europäisches Patentamt
## European Patent Office
## Office européen des brevets

(19)

(11) Veröffentlichungsnummer: **0 140 017**
**B1**

(12) # EUROPÄISCHE PATENTSCHRIFT

(45) Veröffentlichungstag der Patentschrift:
04.02.87

(51) Int. Cl.⁴: **B 05 B 12/00,** B 05 B 15/06,
G 05 B 19/00

(21) Anmeldenummer: **84110298.1**

(22) Anmeldetag: **29.08.84**

(54) Einrichtung zum Behandeln von Hohlräumen.

(30) Priorität: **02.09.83 DE 3331784**

(43) Veröffentlichungstag der Anmeldung:
**08.05.85 Patentblatt 85/19**

(45) Bekanntmachung des Hinweises auf die Patenterteilung:
**04.02.87 Patentblatt 87/6**

(84) Benannte Vertragsstaaten:
**DE FR GB IT**

(56) Entgegenhaltungen:
**DE-A-3 038 143**
**DE-A-3 110 390**
**DE-A-3 133 750**
**DE-B-2 657 533**

(73) Patentinhaber: **J. Wagner GmbH, Eisenbahnstrasse 18- 24, D-7990 Friedrichshafen 1 (DE)**

(72) Erfinder: **Bader, Peter, Fitzenweiler Strasse 13, D-7778 Markdorf (DE)**
Erfinder: **Klingen, Willy, Schillerstrasse 21, D-7778 Markdorf (DE)**

(74) Vertreter: **Münzhuber, Robert, Dipl.- Phys., Patentanwalt Rumfordstrasse 10, D-8000 München 5 (DE)**

EP 0 140 017 B1

## Beschreibung

Die Erfindung betrifft eine Einrichtung zum Behandeln von Hohlräumen, insbesondere einer Automobilkarosserie gemäß Oberbegriff des Anspruches 1.

Die bekannten Einrichtungen dieser Art, bei denen also dem Werker die Reihenfolge vorgegeben ist, in welcher er die Düsensonden zu benutzen hat, haben den Nachteil, daß es für den ungeübten Werker oftmals schwierig ist zu erkennen, welchen Hohlraum er nun mit der an der Reihe befindlichen Sonde zu bearbeiten hat. Außerdem sind die bekannten Einrichtungen mit einem Lochband-Lesegerät versehen und nur mit vergleichsweise großem aufwand auf andere Reihenfolgen und/oder Zeitabläufe umzustellen.

Ferner sind auch Einrichtungen zum Beschichten von Hohlräumen bekannt, bei denen die Wahl der Reihenfolge für die Hohlraumbehandlung dem Werker selbst überlassen ist. Die für die unterschiedlichen. Hohlräume benötigten unterschiedlichen Düsensonden befinden sich dabei auf einem Halter, der je nach Düsenform unterschiedliche Etagen aufweist, wobei eine Warneinrichtung vorgesehen ist, die nach einer bestimmten Zeitspanne anspricht, wenn nicht alle Düsen benutzt worden sind. Ein Nachteil dieser Einrichtungen besteht darin, daß der Werker sich genau merken muß, mit welcher Düsensonde er welchen Hohlraum behandelt hat. Dies wird dann umso schwieriger, je mehr unterschiedliche Hohlräume mit der gleichen Düsensonde zu behandeln sind und es kann nicht ausgeschlossen werden, daß ein Hohlraum mit der falschen Düsensonde oder ein Hohlraum mehrfach und dafür ein anderer Hohlraum überhaupt nicht behandelt werden, insbesondere wenn man berücksichtigt, daß der Werker unter Zeitdruck steht. Darüberhinaus ist eine solche Einrichtung dann überhaupt nicht verwendbar, wenn der Werker ein Roboter ist.

Aufgabe der vorliegenden Erfindung ist deshalb eine Einrichtung der eingangs erwähnten Art so zu verbessern, daß die Hohlraumbehandlung nach Reihenfolge und Behandlungszeit in Vorgegebener Weise abläuft, dem Werker die Zuordnung der jeweiligen Düsensonde zum betreffenden Hohlraum deutlich erkennbar gemacht wird, eine Umstellung auf andere Karosserien leicht und schnell möglich ist.

Die Lösung dieser Aufgabe ergibt sich aus den Merkmalen des Kennzeichens des Anspruches 1. Gemäß der Erfindung wird also der Steuerkreis der Einrichtung mit einem Programmspeicher verbunden, womit es ohne Schwierigkeiten möglich ist, alle Zeitabläufe auf einfache Weise vorzugeben und bei Bedarf umzustellen. Dadurch, daß für jede Düsensonde zwei Anzeigelampen vorgesehen sind, eine an der Sondenaufnahme, die andere auf einer Symbol-Anzeigetafel, wird dem Werker nicht nur angegeben, welche Sonde er zu benutzen hat, sondern darüberhinaus, weicher Hohlraum mit dieser Sonde behandeln werden muß. Das erleichtert dem Werker sein; Arbeit beträchtlich und erhöht die Sicherheit.

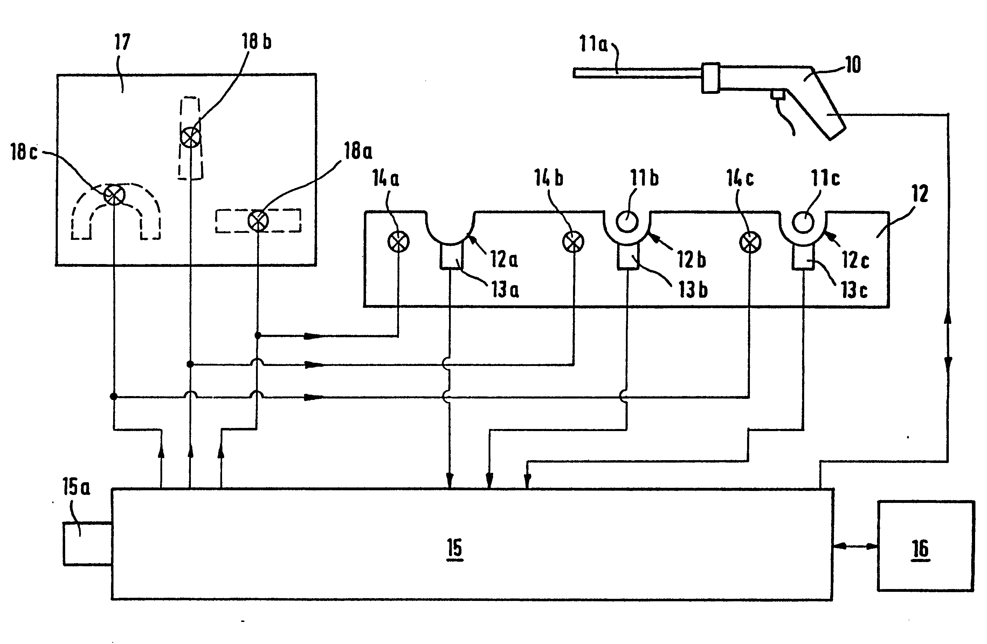

Weitere Vorteile und Einzelheiten der Erfindung ergeben sich aus der nachfolgenden Beschreibung und der Zeichnung. Auf der aus einer einzigen Figur bestehenden Zeichnung ergibt sich schematisch der grundsätzliche Aufbau und die grundsätzliche Schaltung der Einrichtung.

Auf der Zeichnung ist mit 10 eine Sprühpistole bezeichnet, an deren Rohrmündung eine Sprühsonde 11a lösbar befestigt ist. Mit 12 ist ein Sprühsonden-Halterungsgestell bezeichnet, das drei Aufnahmen 12a, 12b und 12c aufweist, wobei die Aufnahme 12a für die auf der Zeichnung mit der Pistole 10 verbundene Sprühsonde 11a bestimmt ist, während in den Aufnahmen 12b und 12 Sprühsonden 11b und 11c gehaltert sind. Jeder Aufnahme 12a, 12b und 12c ist ein Schalter 13a, 13b und 13c sowie eine Anzeigelampe 14a, 14b und 14c zugeordnet. Von einem elektronischen Steuerkreis 15 führen Steuerleitungen zu den drei anzeigelämpchen 14a, 14b und 14c, Signalleitungen zu den drei Schaltern 13a, 13b und 13c sowie eine kombinierte Steuer- und Signalleitung zur Pistole 10. Der Steuerkreis 15 steht außerdem mit einem programmspeicher 16 in Verbindung. Mit 17 ist eine Symbol-Anzeigetafel bezeichnet, auf der drei Anzeigelämpchen 18a, 18b und 18c angeordnet sind, die derart mit den Steuerleitungen der Anzeigelämpchen 14a, 14b und 14c verbunden sind, daß drei Lampenpaare 14a, 18a sowie 14b, 18b und 14c, 18c entstehen, die vom Steuerkreis 15 jeweils gemeünsam ein- bzw. ausgeschaltet werden.

Die Einrichtung arbeitet folgendermaßen. Vor Ankunft einer Kraftfahrzeugkarosserie, deren Hohlräume behandelt werden sollen, befinden sich alle Düsensonden 11a, 11b, 11c in ihren entsprechenden Aufnahmen 12a, 12b, 12c des Aufnahmegestells 12 und alle Anzeigelämpchen 14a, 18a; 14b, 18b; 14c, 18c sind erloschen. Kommt nun eine Karosserie in den Arbeitsbereich der Einrichtung, dann schaltet der Werker mittels des Einschalters 15a die Steuerung ein, mit der Folge, daß der Steuerkreis 15 vom Programmspeicher 16 erregt wird, derart, daß er dem Werker anzeigt, welche der Sprühsonden er als erste abzuarbeiten hat. Handelt es sich dabei beispielsweise um die Sonde 11a, dann leuchtet das der Aufnahme 12a, in welcher sich die Sonde 11a befindet, benachbarte Lämpchen 14a und zugleich das auf der Symbol-Anzeigetafel 17 befindliche, zugeordnete Lämpchen 18a auf. Der Werker erkennt also, daß er die in der Aufnahme 12a befindliche Sonde 11a entnehmen und an der Sprühpistole 10 anbringen soll. Zugleich aber wird dem Werker durch das Aufleuchten der Lampe 18a auf der Tafel 17 gezeigt, welchen der Hohlräume er mit der Düsensonde 11a bearbeiten soll, wobei zweckmäßigerweise die Tafel 17 eine schematische Darstellung der Karosserie mit ihren Hohlräumen trägt und das Lämpchen 18a sich an der Stelle der betreffenden Hohlraumdarstellung befindet. Der Werker führt also dann die an der Pistole 10 befindliche Düsensonde 11a in den betreffenden Hohlraum ein und löst den Sprühvorgang aus. Dabei wird über die kombinierte Steuer- und Signalleitung ein Signal auf den Steuerkreis 15 gegeben und dort bzw. im Programmspeicher 16 gespeichert. Nach Beendigung des Sprühvorgangs nimmt der Werker die Sonde 11a wieder von der Pistole 10 ab und legt sie zurück in die Aufnahme 12a. Dadurch wird der der Aufnahme 12a zugeordnete Schalter 13a betätigt und gibt ein Signal auf den Steuerkreis 15. Unter der Voraussetzung, daß der Steuerkreis 15 Vorab das erwähnte, das Auslösen der Sprühpistole anzeigende Signal erhalten hat, löscht er nun beim Empfang des Signals des Schalters 13a die Lämpchen 14a und 18a und schaltet gemäß dem Befehl des Programmspeichers 16 das nächste Lampenpaar an, beispielsweise das Lampenpaar 14b, 18b. Der Werker entnimmt nun die Düsensonde 11b der Aufnahme 12b und verfährt in entsprechender Weise wie zuerst in Verbindung mit der Düsensonde 11a beschrieben worden ist. Die Vorgänge wiederholen sich bis die letzte Düsensonde, im vorliegenden Fall die Düsensonde 11c, abgearbeitet worden ist. Beim Zurücklegen dieser letzten Düsensonde 11c in ihre Aufnahme 12c leuchtet dann kein neues Lampenpaar mehr auf, sodaß der Werker weiß, daß der Beschichtungsvorgang beendet ist und er die nächstfolgende Karosserie abzuwarten hat.

Selbstverständlich werden in der Praxis nicht nur drei Düsensonden und drei Aufnahmen mit zugehörigen Schaltern und Lämpchen vorgesehen sein; meist handelt es sich um zehn bis zwanzig Düsensonden. Als Schalter 13 können Berührungsschalter, etwa auf das Gewicht der Düsensonden ansprechende Schalter, oder auch berührungslose, induktiv oder kapazitiv arbeitende Schalter Verwendung finden. Der Einschalter 15a ist nicht notwendigerweise ein vom Werker manuell zu betätigender Schalter; es kann sich auch um einen Fernschalter handeln, der bei Annäherung einer zu bearbeitenden Karosserie selbsttätig den Steuerkreis 15 einschaltet. Weiterhin kann dann, wenn alle Düsenrohre 11 abgearbeitet sind, zusätzlich ein optisches oder akustisches Signal erfolgen, das dem Werker zusätzlich die Beendigung des Arbeitsganges anzeigt.

Wie bereits erwähnt, erlöscht das einer bestimmten Aufnahme zugehörige Lampenpaar beim Zurücklegen des betreffenden Düsensonde nur dann, wenn der Steuerkreis 15 bereits vorab ein Signal empfangen hat, welches das Auslösen des Sprühvorgangs anzeigt. Damit soll vermieden werden, daß bei einem Zurücklegen der Düsensonde in die Aunahme ohne Beschichten des betreffenden Hohlraums die Einrichtung auf die nächste Düsensonde bzw. den nächsten Hohlraum weiterschaltet. Zur Erhöhung der Sicherheit kann im Steuerkreis 15 zusätzlich ein Zeitkreis angeordnet werden, der verschiedene Funktionen erfüllen kann. So kann beispielsweise die Zeitüberwechung durch den Zeitkreis mit Entnahme der Düse von seiner Aufnahme ausgelöst werden, wobei die vorgegebene Zeit auch die mechanischen Vorgänge zum ankoppeln der Düsensonde enthält; mit dem Auslösen des Sprühvorgangs durch Betätigen des Abzugsbügels der Sprühpistole wird dann die Zeitüberwachung aufgehoben. Wird die vorgegebene Zeit überschritten, ohne daß ein Sprühvorgang ausgelöst worden ist, dann kann dies etwa dadurch angezeigt werden, daß das brennende Lampenpaar auf Flackerlicht geschaltet wird. Erfolgt dann auch nach einer zusätzlichen Zeitspanne kein Sprühvorgang, dann wird das Programm unterbrochen und die Unterbrechung wird durch akustische und/oder optische Warnanzeigen deutlich gemacht.

Zweckmäßigerweise ist im Steuerkreis 15 ein weiterer Zeitkreis untergebracht, der vom Programmspeicher gesteuert wird und in an sich bekannter Weise die Zeitdauer des jeweiligen Sprühvorgangs festlegt. In diesem Fall löst dann der Werker durch Betätigen des Abzugsbügels der Pistole 10 lediglich den Sprühvorgang aus, hat aber selbst keinen Einfluß auf die Dauer des Sprühvorgangs. Damit wird selbsttätig die Menge des in den jeweiligen Hohlraum gelangenden Konservierungsmaterials festgelegt. Selbstverständlich kann dieser Zeitkreis aber auch in der Sprühpistole 10 untergebracht sein.

Es gibt auch Fälle, daß eine Sprühsonde zum Bearbeiten von zwei oder mehreren Hohlräumen bestimmt ist. Hier werden dann der der Düsensondenaufnahme benachbarten Anzeigelampe 14 nicht nur eine, sondern entsprechend mehrere Lampen 18 auf der Anzeigetafel 17 zugeordnet. Jedesmal dann, wenn die betreffende Düsensonde an der Reihe ist, leuchten dann die der Aufnahme zugeordnete Lampe 14 und eine andere der zugeordneten Lampen 18 auf der Anzeigetafel 17 auf. Gerade bei solchen Mehrfachbenutzungen einer Düsensonden erbringt die Erfindung eine besonders große Arbeitserleichterung für den Werker und eine beträchtliche Erhöhung der Sicherheit. Bei Hohlraumbehandlungen, wo eine Düsensonde für mehrere Hohlräume zu verwendenist, bleibt, vom Programmspeicher gesteuert die Signallampe am Halterungsgestell so lange an, während an der Symbolanzeigetafel die Signallämpchen von einem auf den anderen Hohlraum wechseln, bis alle diese Hohlräume behandelt worden sind.

Sollen mehrere Karosserietypen bearbeitet werden, dann kann die Einrichtung in zwei Richtungen ausgebaut werden. Sind die meisten Düsensonden für die zu bearbeitenden Karosserietypen geeignet, dann wird man das Halterungsgestellt 12 so vergrößern, daß alle zum Einsatz kommenden Düsensonden dort Platz finden. Der Programmspeicher 16 beinhaltet dann für jeden Karosserietyp ein besonderes Programm, derart, daß die für den jeweiligen Karosserietyp erforderlichen Düsensonden in der richtigen Reihenfolge ausgewählt, die dabei nicht erforderlichen Düsensonden ausgeblendet werden. Die Wahl des richtigen Programms kann beispielsweise durch den Werker selbst erfolgen, etwa durch Eingabe einer bestimmten Magnetkarte in den Programmspeicher, oder auch selbsttätig, beispielsweise durch den Typ der ankommenden Karosserie erkennende und entsprechende Signale auf den Programmspeicher gebende mechanische, optische oder elektrische Taster. Wird dagegen für jeden Karosserietyp ein anderer Satz von Düsensonden benötigt, dann ist es zweckmäßig, für jeden Karosserietyp ein besonderes Halterungsgestell 12 aufzustellen, wobei jedoch alle Halterungsgestelle an einen einzigen Steuerkreis mit Programmspeicher angeschlossen sind. Hier kann die Auswahl des Programms durch den Werker auf besonders einfache Weise erfolgen. Nähert sich eine Karosserie, dann leuchtet auf jedem der Halterungsgestelle jeweils die der zuerst zu benutzenden Düsensonden zugeordnete Anzeigelampe auf. Der den Karosserietyp erkennende Werker entnimmt dann die Düsensonde von dem entsprechenden Aufnahmegestell, womit die Anzeigelampen der anderen Aufnahmegestelle erlöschen und bis zur Beendigung des Beschichtungsvorgangs der betreffenden Karosserie auch nicht mehr aufleuchten. In diesem Fall wird man auch mehrere Anzeigetafeln 17 vorsehen. Es ist aber auch möglich, eine elektronische, etwa mit Flüssigkeitskristallen arbeitende Anzeigetafel 17 zu verwenden, die ebenfalls vom Programmspeicher über den Steuerkreis betätigt wird, derart, daß für jeden Karosserietyp entsprechende Symbole erscheinen. In diesem Fall ist es dann besonders vorteilhaft, die anzeigelampen nicht als einfache Lämpchen, sondern als den Umrissen des jeweiligen Hohlraums entsprechende Flächenleuchten auszubilden. Selbstverständlich sind derartige Anzeigetafeln aber auch dann verwendbar, wenn nur ein einziger Karosserietyp bearbeitet werden soll.

## Patentansprüche

1. Einrichtung zum Beschichten von Hohlräumen insbesondere einer Automobilkarosserie, mit einer Sprühpistole (10), mit der Sprühpistole verbindbaren Düsensonden (11a-c), deren jede einem bestimmten Hohlraum zugeordnet ist, einem Düsensonden-Halterungsgestell (12), das Halterungsaufnahmen (12a-c), deren jede einer bestimmten Düsensonde zugeordnet ist, und jeder Halterungsaufnahme zugeordnete Signallampen (14a-c) aufweist, und mit einem elektrischen Steuerkreis (15), der die Signallampen in vorgegebener Reihenfolge nacheinander ein- und ausschaltet, dadurch gekennzeichnet, daß an den Halterungsaufnahmen (l2a, 12b, 12c) des Halterungsgestells (12) Erkennungsschalter L13a, 13b, 13c) angeordnet sind, die beim Einbringen der zugeordneten Düsensonde (11a, 11b, 11c) in die Aufnahme (12a, 12b, 12c) an den Steuerkreis (15) ein elektrisches Signal zum Abschalten der zugehörigen Signallampe (14a,14b,14c) abgeben, daß an den Steuerkreis (15) ein Programmspeicher (16) angeschlossen ist, der über den Steuerkreis (15) die Signallampen (14a, 14b, 14c) den Signalen der Erkennungsschalter (13a, 13b, 13c) bewirkten Abschalten der in der Reihenfolge unmittelbar vorausgehenden Signallampe nacheinander einschaltet, und daß jede Signallampe (14a, 14b, 14c) aus einem zusammengeschalteten und damit gleichzeitig ein- bzw. ausschaltbarer Lampenpaar (14a, 18a; 14b, 18b; 14c, 18c) besteht, wobei jeweils die eine Lampe (14a, 14b, 14c) an der Halterungsaufnahme (12a, 12b, 12c) des Halterungsgestells (12), die andere Lampe (18a, 18b, 18c) auf einer gesonderten Symbol-Anzeigetafel (17) angeordnet ist.

2. Einrichtung nach Anspruch 1, dadurch gekennzeichnet, daß die Erkennungsschalter (13) kontaktlose Annäherungsschalter sind.

3. Einrichtung nach Anspruch 1 oder 2, dadurch gekennzeichnet, daß die Symbol-Anzeigetafel (17) eine steuerbare elektronische Anzeigetafel ist.

4. Einrichtung nach einem der Ansprüche 1 bis 3, dadurch gekennzeichnet, daß der Steuerkreis (15) über eine Signalleitung mit dem Auslöser der Sprühpistole (10) verbunden ist und erst nach Empfang eines Auslösesignals über diese Leitung bei Empfang eines Erkennungsschalter-Signals die diesem Schalter zugeordneten Anzeigelampen löscht.

5. Einrichtung nach Anspruch 4, dadurch gekennzeichnet, daß der Steuerkreis (15) einen Zeitkreis aufweist, der bei Nichtankunft eines Auslösesignals nach einer vorgegebenen Zeitspanne ein Warnsignal auslöst.

6. Einrichtung nach Anspruch 5, dadurch gekennzeichnet, daß der Zeitkreis nach einer zusätzlichen Zeitspanne ohne Ankunft eines Auslösesignals ein Stopsignal abgibt.

7. Einrichtung nach einem der Ansprüche 1 bis 6, dadurch gekennzeichnet, daß der Steuerkreis einen manuell oder über Taster selbsttätig schaltenden Einschalter (15a) aufweist.

8. Einrichtung nach einem der Ansprüche 1 bis 7, bei welcher eine Düsensonde mehreren Hohlräumen zugeordnet ist, dadurch gekennzeichnet, daß der der Düsensonden-Aufnahme benachbarten Anzeigelampe (14) mehrere Anzeigelampen (18) auf der Anzeigetafel (17) zugeordnet sind.

9. Einrichtung nach einem der Ansprüche 1 bis 8 zum Bearbeiten unterschiedlicher Karosserien, gekennzeichnet durch mehrere Aufnahmegestelle (12) und eine steuerbare oder mehrere nicht-steuerbare Anzeigetafeln (17).

10. Einrichtung nach einem der Ansprüche 1 bis 9, dadurch gekennzeichnet, daß der Programmspeicher (16) ein Magnetkartenspeicher ist.

**Claims**

1. Device for treating hollow spaces, in particular of an automobile body, comprising a spray gun (10), nozzle probes (11a-c) which can be connected to the spray gun, each of which is assigned to a specific hollow space, a nozzle probe-holding structure (12) which has holding receptacles (12a-c), each of which is assigned to a specific nozzle probe, and indicator lamps (14a-c) assigned to each holding receptacle, and an electronic control circuit (15) which connects and disconnects the indicator lamps in predetermined sequence one after the other, characterised in that on the holding receptacles (12a, 12b, 12c) of the holding structure (12) there are arranged identification switches (13a, 13b, 13c) which, when the associated nozzle probe (11a, 11b, 11c) is brought into the receptacle (12a, 12b, l2c), emit an electrical signal to the control circuit (15) to disconnect the associated indicator lamp (14a, 14b, 14c), in that a program store (16) is connected to the control circuit (15) which, via the control circuit (15), switches on the indicator lamps (14a, 14b, 14c) one after the other according to a stored sequence, but after disconnection of the indicator lamp, caused by the signals of the identification switch (13a, 13b, 13c), proceeding directly in the sequence, and in that each indicator lamp (14a, 14b, 14c) comprises a pair of electrically interconnected lamps (14a, 18a; 14b, 18b; 14c, 18c) which can therefore be switched on or off at the same time, whereby respectively one lamp (14a, 14b, 14c) is arranged on the holding receptacle (12a, 12b, 12c) of the holding structure (12), and the other lamp (18a, 18b, 18c) is arranged on a separate symbol-indicator board (17).

2. Device according to claim 1, characterised in that the identification switches (13) are noncontact proximity switches.

3. Device according to claim 1 or 2, characterised in that the symbol-indicator board (17) is a controllable electronic indicator board.

4. Device according to one of claims 1 to 3, characterised in that the control circuit (15) is connected via a signal line to the trigger device of the spray gun (10) and does not extinguish the indicator lamps assigned to this switch until a trigger signal has been received via this line when an identification switch signal has been received.

5. Device according to claim 4, characterised in that the control circuit (15) has a time circuit which outputs a warning signal when a trigger signal does not arrive after a specific time span.

6. Device according to claim 5, characterised in that the time circuit emits a stop signal after an additional time span without the arrival of a trigger signal.

7. Device according to one of claims 1 to 6, characterised in that the control circuit has a closing switch (15a) which operates manually or automatically by means of keying devices.

8. Device according to one of claims 1 to 7, in which a nozzle probe is assigned to several hollow spaces, characterised in that several indicator lamps (18) on the indicator board (17) are assigned to the indicator lamp (14) adjacent to the nozzle probe receptacle.

9. Device according to one of claims 1 to 8 for treating different automobile bodies, characterised by several holding structures (12) and one controllable or several non-controllable indicator boards (17).

10. Device according to one of claims 1 to 9, characterised in that the program store (16) is a magnetic card store.

**Revendications**

1. - Dispositif pour l'enduction de volumes creux, notamment d'une carrosserie d'automobile, comportant un pistolet pulvérisateur (10), des sondes à buse (11a-c) pouvant être reliées au pistolet pulvérisateur, dont chacune est associée à un volume creux déterminé, un bâti-support (12) pour les sondes à buse comportant des logements (12a-c) dont chacun est associé à une sonde à buse déterminée, et des lampes-témoins (14a-c) associées à chaque logement, ainsi qu'un circuit de commande (15) électrique qui met successivement en circuit et hors circuit les lampes-témoins selon un ordre prédéterminé, caractérisé en ce qu'on dispose sur les logements (12a, 12b, 12c) du bâti-support (12) des interrupteurs de reconnaissance (13a, 13b, 13c), qui, lors de la mise en place de la sonde à buse associée (11a, 11b, 11c) dans le logement (12a, 12b, 12c), envoient au circuit de commande (15) un signal électrique pour mettre hors circuit la lampe-témoin associée (14a, 14b, 14c), on raccorde au circuit de commande (15) une mémoire de programme (16) qui, par l'intermédiaire du circuit de commande (15) met successivement en circuit les lampes-témoins (14a, 14b, 14c) selon un ordre enregistré, toutefois après la mise hors circuit de la lampe-témoin immédiatement précédente dans la succession provoquée par les signaux des interrupteurs d'identification (13a, 13b, 13c), et chaque lampe (14a, 14b, 14c) est constituée par une paire de lampes (14a, 13a; 14b, 18b; 14c, 18c) montées ensemble et de ce fait pouvant être mises en circuit ou hors circuit simultanément, l'une des lampes (14a, 14b, 14c) étant placée sur le logement (12a, 12b, 12c) du bâti-support (12) et l'autre lampe (18a, 18b, 18c) étant placée sur un panneau d'affichage de symboles (17) séparé.

2. - Dispositif selon la revendication 1, caractérisé en ce que les interrupteurs d'identification (13) sont des interrupteurs d'approche sans contact.

3. - Dispositif selon la revendication 1 ou 2, caractérisé en ce que le panneau d'affichage de symboles est un panneau d'affichage électronique pouvant être commandé.

4. - Dispositif selon l'une des revendications 1 à 3, caractérisé en ce que le circuit de commande (15) est relié par une canalisation de signaux à la gachette du pistolet pulvérisateur (18) et n'éteint les lampes-témoins associées à cet interrupteur qu'après avoir reçu un signal de déclenchement par cette canalisation à la réception d'un signal de l'interrupteur d'identification.

5. - Dispositif selon la revendication 4, caractérisé en ce que le circuit de commande (15) comporte un circuit rythmeur qui déclenche un signal d'avertissement au bout d'un laps de temps prédéterminé si un signal de déclenchement n'arrive pas.

6. - Dispositif selon la revendication 5, caractérisé en ce que le circuit rythmeur, au bout d'un laps de temps supplémentaire, émet un signal d'arrêt si un signal de déclenchement n'arrive pas.

7. - Dispositif selon l'une des revendications 1 à 6, caractérisé en ce que le circuit de commande comporte un interrupteur (15a) pouvant être actionné manuellement ou automatiquement par l'intermédiaire de détecteurs.

8. - Dispositif selon l'une des revendications 1 à 7, dans lequel une sonde à buse est associée à plusieurs volumes creux, caractérisé en ce qu'à la lampe-témoin (14) proche du logement pour la sonde à buse sont associées plusieurs lampes-témoins (18) sur le panneau d'affichage (17).

9. - Dispositif selon l'une des revendications 1 à 8 pour traiter des carrosseries différentes, caractérisé par plusieurs bâtis-supports (12) et un panneau d'affichage commandable ou plusieurs panneaux d'affichage non commandables (17).

10. - Dispositif selon l'une des revendications 1 à 9, caractérisé en ce que la mémoire de programme (16) est une mémoire à cartes magnétiques.

0 140 017